# EUROPEAN PATENT APPLICATION

(11) **EP 4 362 173 A1**
(43) Date of publication of application: **01.05.2024**
(21) Application number: 22203614.7
(22) Date of filing: 25.10.2022
(51) Int. Cl.: H01M 10/6554, H01M 50/35, H01M 50/512, H01M 10/6556, H01M 50/204, H01M 50/24

(54) **BATTERY**

(71) Applicant: MAHLE International GmbH, 70376 Stuttgart (DE)
(72) Inventor: CUMMINGS, Gareth, CV23 8XH Kilsby Rugby (GB)
(74) Representative: BRP Renaud & Partner mbB Rechtsanwälte Patentanwälte Steuerberater

(57) **Abstract**

The invention relates to a battery (1) for a motor vehicle. The battery (1) contains a cell stack (2) with a plurality of battery cells (3), at least one current busbar (5a, 5b) and a cooling plate (9). The respective current busbar (5a, 5b) is electrically conductively connected to identical-poled electrical contacts (4a, 4b) of the battery cells (3), and the cooling plate (9) is connected to the respective current busbar (5a, 5b) in a heat-conducting manner. The cooling plate (9) contains at least one degassing opening (17) for degassing the battery cells (3).

## Description

The invention relates to a battery for a motor vehicle according to the generic term of claim 1.

A battery contains several battery cells stacked together to a cell stack. Typically, the battery cells contain an emergency gas vent formed by structural weak points at one of the terminals. In the event of an internal electrical short circuit or other failure, the gases and solid particles generated in the battery cell can escape from the battery cell at said structural weak point. More often, however, the escape of generated gases is impeded by other elements of the battery.

It is therefore the object of the invention to provide an improved or at least alternative embodiment for a battery of the type described, in which the disadvantages described are overcome.

This object is solved according to the invention by the object of independent claim 1. Advantageous embodiments are the subject of the dependent claims.

The present invention is based on the general idea of providing openings in further elements of the battery for the escape of the gases and solid particles generated in the battery cell.

The battery according to the invention is provided or designed for a motor vehicle. The battery contains a cell stack with a plurality of battery cells, at least one electrically conductive current busbar, and a cooling device with a cooling plate. The battery cells are thereby aligned in the cell stack in a longitudinal direction of the cell stack and are arranged side by side in at least one cell row. The respective current busbar is arranged at a longitudinal end of the cell stack corresponding to the longitudinal direction of the cell stack and is electrically conductively connected i.e. electrically contacted to identical-poled electrical contacts of the battery cells. The cooling plate is arranged on the respective current busbar facing away from the cell stack and is connected to the respective current busbar in a heat-conducting manner. According to the invention, the cooling plate contains at least one degassing opening penetrating the cooling plate in the longitudinal direction of the cell stack for degassing the battery cells.

In the battery according to the invention, the respective current busbar can be cooled via the cooling plate. If there is an internal electrical short circuit or other failure in one of the battery cells, the gases and solid particles generated in the battery cell can escape through the at least one degassing opening to the opposite side of the cooling plate. As a result, the gases and solid particles are separated from the other battery cells by the cooling plate and the other battery cells are protected from failure. For example, the respective degassing opening can be slit-shaped with a width of about 2 mm. In principle, however, the degassing opening can also be shaped differently - for example round or oval or polygonal.

The battery cells of the cell stack can be cylindrical or prismatic, for example. The longitudinal center axes or the rotation axes or the symmetry axes of the battery cells are then aligned parallel to the longitudinal direction of the cell stack and the battery cells are arranged or stacked next to each other in at least one cell row. The battery cells are preferably electrically connected in parallel with each other in the cell stack. The respective current busbar exclusively contacts the identical-poled i.e. same-poled i.e. homopolar electrical contacts of the battery cells. For this purpose, the respective current busbar can be welded, in particular laser-welded, to the respective contacts. The respective identical-poled contacts of the battery cells can each be contacted with one another via a plurality of busbars. The respective identical-poled contacts of the battery cells are arranged at one longitudinal end of the cell stack. In this context, the electrical contacts are to be understood as negative terminals and positive terminals of the respective battery cells.

The cooling plate is connected to the respective busbar in a heat-conducting manner so that the heat generated in the respective busbar can be transferred to the cooling plate. The cooling plate can be formed from a heat-conducting material, preferably from metal, particularly preferably from aluminum. In order to electrically insulate the cooling plate from the respective current busbar, the battery can contain a dielectric insulating layer. The insulating layer can then be suitably arranged between the cooling plate and the respective current busbar.

The cooling plate can contain a plurality of degassing openings, and the plurality of degassing openings can form at least one row of openings. The respective row of openings can then be arranged in the longitudinal direction of the cell stack above the respective cell row and transversely to the longitudinal direction of the cell stack parallel to the respective cell row. As a result, the gases and solid particles generated in the battery cell can escape directly via the respective degassing openings. Advantageously, the number of respective rows of openings can correspond to the number of the respective cell rows in the cell stack.

The respective degassing opening can be assigned in the respective row of openings to one or to two or to several battery cells of the respective cell row. Alternatively, the respective battery cell in the cell row can be assigned to one or to two or to several degassing openings of the respective opening row.

The cooling plate can contain at least one contact area and at least one collecting area. The respective contact area and the respective collecting area can alternate transversely to the longitudinal direction of the cell stack at least in regions. In the respective collecting area, the cooling plate cannot be flowed through and, in the respective contact area, at least one channel through which a cooling fluid can flow is formed in the cooling plate. The heat generated in the respective current busbar can then be transported by the cooling fluid to the cooling plate and thus the respective current busbar can be cooled. The at least one channel can be fluidically connected to the outside via connectors. The cooling fluid is preferably a liquid.

The respective collecting area of the cooling plate can extend parallel to and above the respective battery cell stack, and the respective contact area of the cooling plate can extend parallel to and be connected to the respective current busbar in a heat-conducting manner. The respective contact area can extend longitudinally toward the cell stack and the respective collecting area can extend longitudinally away from the cell stack, such that the respective contact area is disposed closer to the cell stack than the respective collecting area. As a result, the respective collecting area can form a volume above the battery cells of the respective battery cell stack in which gases and solid particles generated in the battery cell can be collected. The at least one degassing opening can thereby be formed in the collecting area of the cooling plate, and the gases and solid particles can then be discharged to the opposite side of the cooling plate via the at least one degassing opening. Since the respective collecting area cannot be flowed through by a fluid, the respective degassing opening does not penetrate the at least one channel formed in the cooling plate.

The number of collecting areas of the cooling plate can correspond to the number of cell rows, wherein all battery cells of the respective cell row are assigned to the same collection area of the cooling plate. The cooling plate can also contain several collecting areas and the cell stack can contain several cell rows. The number of contact areas of the cooling plate can correspond to the number of current busbars, wherein the respective contact area is assigned to the respective current busbar. In this case, the cooling plate can contain several contact areas and the battery can contain several current busbars.

The respective collecting area of the cooling plate can be divided into at least two subareas, wherein one or two or more battery cells can be assigned to the respective subarea. An identical number of degassing openings can be assigned to each subarea. The respective subareas can be fluidically separated from one another, so that the gases and solid particles generated in the battery cell are collected in the single subarea and are not guided into the neighboring subareas. As a result, the gases and solid particles generated in the battery cell are dispersed in the respective single subarea and the battery cells in the neighboring subareas are protected against failure.

The cooling plate can contain a structured structural plate facing the respective busbar and a plate-shaped i.e. flat cover plate facing away from the respective busbar. The at least one channel can then be formed between the structural plate and the cover plate. The structural plate can be at least partially corrugated in shape. The shape of the structural plate can map the at least one channel in the cooling plate. For this purpose, the structural plate can contain at least one groove mapping the form of the at least one channel. The structural plate can be structured by pressing, for example. The structural plate and the cover plate abut one another in the collecting areas and are joined to one another in a fluid-tight manner. For example, the structural plate and the cover plate can be welded together. In the contact areas, the structural plate and the cover plate are spaced apart from one another and delimit the at least one channel to the outside. Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: an exploded view of a battery according to the invention with cylindrical battery cells;
- Figs. 2 and: 3a sectional view and a partial sectional view of the battery according to the invention at degassing openings;
- Fig. 4: a sectional view of the battery according to the invention with escape of gases drawn in;
- Fig. 5a: view of a cooling plate in the battery according to the invention.

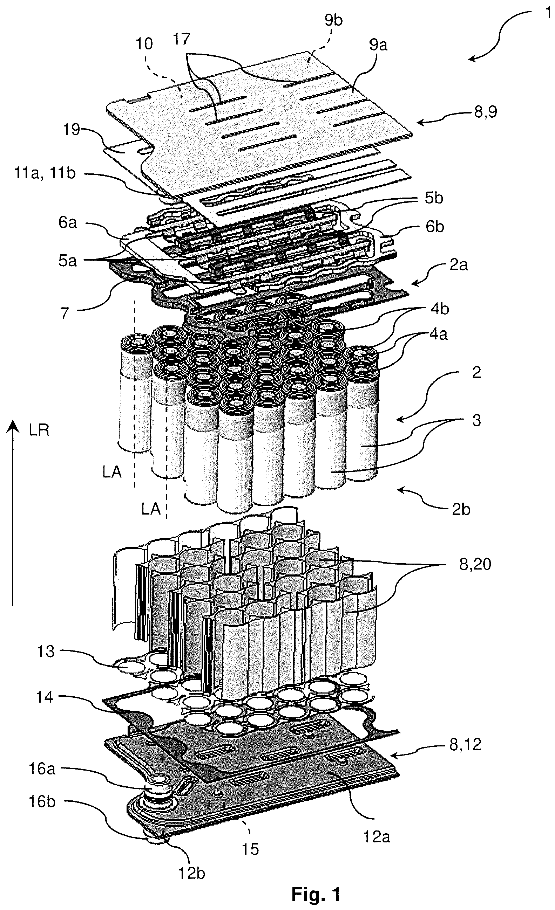

Fig. 1 shows an exploded view of a battery 1 according to the invention for a motor vehicle. Here and further, only some elements of the same type in the battery 1 are provided with reference signs for clarity. The elements not directly visible are marked with broken lines. The battery 1 contains a cell stack 2 with a plurality of cylindrical battery cells 3 which are aligned with their longitudinal center axes LA parallel to a longitudinal direction LR of the cell stack 2 and side by side forming several cell rows. The cell stack 2 contains two longitudinal ends 2a and 2b corresponding to its longitudinal direction LR. The battery cells 3 contain electrical contacts 4a and 4b - positive terminals and negative terminals - arranged at one end of the battery cells 3 and at the longitudinal end 2a of the cell stack 2.

For contacting the contacts 4a and 4b, the battery 1 contains a plurality of current busbars 5a and 5b. The current busbars 5a and 5b are arranged at the longitudinal end 2a of the cell stack 2 and are associated with the corresponding contacts 4a and 4b. Electrically conductive contact plates 6a and 6b are disposed between the battery cells 3 and the current busbars 5a and 5b. The contact plates 6a and 6b bear on i.e. are supported by the battery cells 3 and the current busbars 5a and 5b bear on i.e. are supported by the contact plates 6a and 6b. The current busbars 5a and 5b are electrically conductively connected to the contact plates 6a and 6b and electrically contacted to the outside via the contact plates 6a and 6b. The current busbars 5a and 5b are guided through openings in the contact plates 6a and 6b to the contacts 4a and 4b. A dielectric insulating layer 7 is arranged between the contact plates 6a and 6b and the battery cells 3.

The battery 1 also contains a cooling device 8 with a cooling plate 9. The cooling plate 9 is arranged at the longitudinal end 2a of the cell stack 2 and at the current busbars 5a and 5b facing away from the cell stack 2. A heat conducting layer 19 is arranged between the cooling plate 9 and the current busbars 5a and 5b. The current busbars 5a and 5b are thus connected to the cooling plate 9 in a heat-conducting manner. The cooling plate 9 contains a plate-shaped i.e. flat cover plate 9a and a structured structural plate 9b, between which channels 10 through which a cooling fluid can flow are formed. The channels 10 are fluidically connected to the outside via connectors 11a and 11b. The cooling fluid is preferably a liquid. The cover plate 9a and the structural plate 9b are joined together in a fluid-tight manner in certain areas.

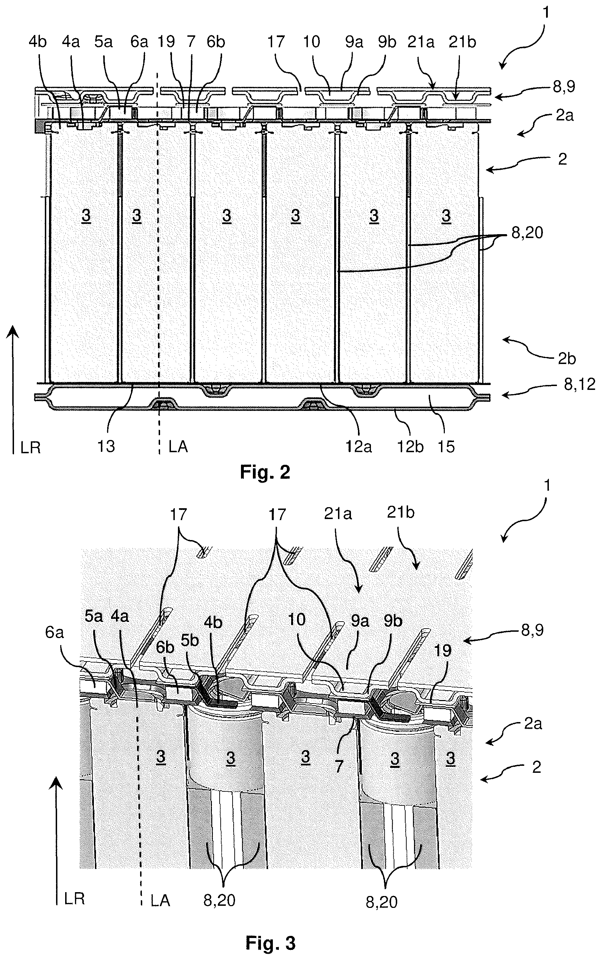

A plurality of slot-shaped degassing openings 17 are formed in the cooling plate 9, which are arranged parallel to and between the current busbars 5a and 5b. The degassing openings 17 thereby penetrate the cooling plate 9 in areas where the cover plate 9a and the structural plate 9b are joined together. In the event of an internal electrical short circuit or other failure, the gases and solid particles generated in the battery cell 3 can escape through the degassing openings 17 to the opposite side of the cooling plate 9. Thus, the gases and solid particles are separated from the other battery cells 3 by the cooling plate 9 and the other battery cells 3 are protected from failure. The design of the cooling plate 9 is explained in more detail below with reference to Fig. 2 to Fig. 5.

The cooling device 8 also contains a cooling plate 12. The cooling plate 12 is arranged at the longitudinal end 2b of the cell stack 2 and is connected to the battery cells 3 in a heat-conducting manner via a heat-conducting adhesive layer 13. The battery cells 3 are thereby connected to the cooling plate 12 in a heat-conducting manner and can be cooled. A dielectric insulating layer 14 is also arranged between the cell stack 2 and the cooling plate 12. The insulating layer 14 defines the distance between the battery cells 3 and the cooling plate 12, and thereby the thickness of the adhesive layer 13. The cooling plate 12 contains a first plate 12a and a second plate 12b, between which a cooling space 15 through which a cooling fluid can flow is formed. The cooling fluid is preferably a liquid. The cooling space 15 through which the cooling fluid can flow is fluidically connected to the outside via connectors 16a and 16b. The cooling space 15 of the cooling plate 12 can be fluidically connected to the channels 10 of the cooling plate 9 and can be flowed through by the same cooling fluid.

The cooling device 8 also contains a plurality of cooling fins 20 aligned parallel to the longitudinal direction LR and arranged between the battery cells 3 of the cell stack 2. The cooling fins 20 are formed from a heat-conducting material and are connected to the battery cells 3 and the cooling plate 12 in a heat-conducting manner. This allows the heat generated in the battery cells 3 to be transported from the battery cells 3 to the cooling plate 12, thereby cooling the battery cells 3. The respective cooling fin 20 can extend in the longitudinal direction LR of the cell stack 2 over 80% to 100% of the height of the respective battery cells 3.

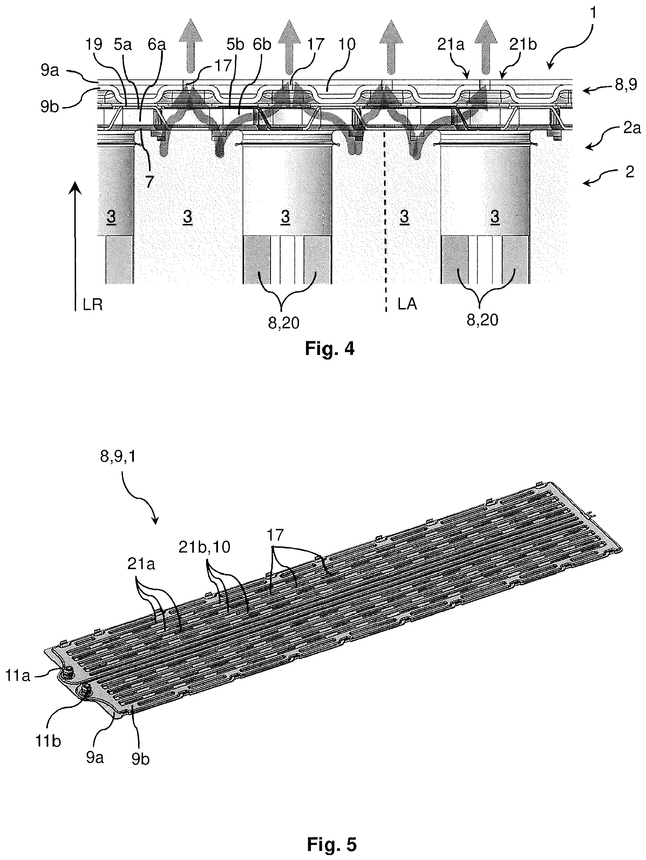

Fig. 2 shows a sectional view of the battery 1 according to the invention. Fig. 3 shows a partial sectional view of the battery according to the invention at degassing openings 17. As can be seen in Fig. 2 and Fig. 3, the structural plate 9b of the cooling plate 9 is structured and wave-shaped in sections. The structure of the structural plate 9b in its entirety is shown in Fig. 5. Due to its structure, the structural plate 9b rests against the cover plate 9a only in regions. As a result, collecting areas 21a and contact areas 21b are formed in the cooling plate 9, wherein the cover plate 9a and the structural plate 9b abuts on each other in the collecting areas 21a and are spaced apart from each other in the contact areas 21b. In the collecting areas 21a, the structural plate 9b and the cover plate 9a are joined to each other, and in the contact areas 21b, the channels 10 are formed. The form of the channels 10 is predetermined by the design of the collecting areas 21a and the contact areas 21b i.e. by the structure of the structural plate 9b.

The collecting areas 21a of the cooling plate 9 are arranged above the individual cell rows and are aligned parallel to them. The respective degassing openings 17 are formed in the collecting areas 21a of the cooling plate 9 and are aligned in rows parallel to the respective cell rows. In this case, the respective degassing opening 17 is assigned to a plurality of battery cells 3 of the respective cell row. The contact areas 21b of the cooling plate 9 are located above the respective current busbars 5a and 5b and are aligned parallel thereto. In the contact areas 21b, the cooling plate 9 is connected to the current busbars 5a and 5b in a heat-conducting manner and, as a result, the current busbars 5a and 5b can be cooled.

Fig. 4 shows a sectional view of the battery 1 according to the invention with escape of gases indicated by arrows. The gases and solid particles can be generated in the battery cells 3 in the event of an internal electrical short circuit or other failure. Via a structural weak point built into the battery cell 3 at the contacts 4a and 4b, the gases and solid particles generated in the battery cell 3 can escape through the degassing openings 17 to the opposite side of the cooling plate 9. This separates the gases and solid particles from the other battery cells 3 through the cooling plate 9 and protects the other battery cells 3 from failure.

Fig. 5 shows a view of the cooling plate 9 of the cooling device 8 in the battery 1 according to the invention from a side facing the cell stack 2 i.e. at the structural plate 9b. Here, the cooling plate 9 contains the channels 10 formed in the contact areas 21b and the connectors 11a and 11b fluidly connected to the channels 10. Fluid can be introduced into the channels 10, and discharged after flowing through the channels 10 through the connectors 11a and 11b. The form of the channels 10 or the contact areas 21b is thereby predetermined by the structure of the structural plate 9b. The structural plate 9b is corrugated in sections so that the channels 10 or the contact areas 21b are aligned parallel to each other in a central area of the cooling plate 9. In this central area, the respective channels 10 or the contact areas 21b are connected to the respective busbars 5a and 5b in a heat-conducting manner.

Collecting areas 21a are formed between the channels 10 i.e. the contact areas 21b. The collecting areas 21a cannot be flowed through and fluidically separate the channels 10 i.e. the contact areas 21b from each other. In this case, the degassing openings 17 are formed in the collecting areas 21a and do not penetrate the channels 10 i.e. the contact areas 21b of the cooling plate 9. In the central area of the cooling plate 9, the collecting areas 21a are arranged parallel to each other and alternately to the channels 10 i.e. contact areas 21b due to the wave-shaped structure of the structural plate 9b. The collecting areas 21a with the degassing openings 17 are located above and parallel to the respective cell rows.

## Claims

1. Battery (1) for a motor vehicle,
- wherein the battery (1) contains a cell stack (2) with a plurality of battery cells (3), at least one electrically conductive current busbar (5a, 5b), and a cooling device (8) with a cooling plate (9),
- wherein the battery cells (3) are aligned in the cell stack (2) in a longitudinal direction (LR) of the cell stack (2) and arranged side by side in at least one cell row,
- wherein the respective current busbar (5a, 5b) is arranged at a longitudinal end (2a) of the cell stack (2) corresponding to the longitudinal direction (LR) of the cell stack (2) and is electrically conductively connected to identical-poled electrical contacts (4a, 4b) of the battery cells (3),
- wherein the cooling plate (9) is arranged on the respective current busbar (5a, 5b) facing away from the cell stack (2) and is connected to the respective current busbar (5a, 5b) in a heat-conducting manner,
**characterized**
**in that** the cooling plate (9) contains at least one degassing opening (17) penetrating the cooling plate (9) in the longitudinal direction (LR) of the cell stack (2) for degassing the battery cells (3).

2. Battery according to claim 1,
characterized
- that the cooling plate (9) contains a plurality of degassing openings (17) and the plurality of degassing openings (17) form at least one row of openings, and
- in that the respective row of openings is arranged in the longitudinal direction (LR) of the cell stack (2) above the respective cell row and transversely to the longitudinal direction (LR) of the cell stack (2) parallel to the respective cell row.

3. Battery according to claim 2,
**characterized**
- **in that** the respective degassing opening (17) in the respective row of openings is assigned to one or to two or to several battery cells (3) of the respective cell row, and/or
- **in that** the respective battery cell (3) in the cell row is assigned to one or to two or to several degassing openings (17) of the respective opening row.

4. Battery according to any one of the preceding claims,
**characterized**
- **in that** the cooling plate (9) contains at least one contact area (21b) and at least one collecting area (21a), which alternate transversely to the longitudinal direction (LR) of the cell stack (2) at least in sections, and
- **in that**, in the respective collecting area (21a), the cooling plate (9) cannot be flowed through and, in the respective contact area (21b), at least one channel (10) through which a cooling fluid can flow is formed in the cooling plate (9).

5. Battery according to claim 4,
**characterized**
**in that** the respective collecting area (21a) of the cooling plate (9) extends parallel to and above the respective cell row, and the respective contact area (21b) of the cooling plate (9) extends parallel to the respective current busbar (5a, 5b) and is connected to the respective current busbar (5a, 5b) in a heat-conducting manner.

6. Battery according to claim 4 or 5,
**characterized**
**in that** the at least one degassing opening (17) is formed in the collecting area (21a) of the cooling plate (9).

7. Battery according to any one of claims 4 to 6,
**characterized**
**in that** the respective collecting area (21a) of the cooling plate (9) is divided into at least two subareas and the respective subarea is assigned to one or to two or to several battery cells (3).

8. Battery according to claim 7,
**characterized**
**in that** the cooling plate (9) contains a plurality of degassing openings (17) and an identical number of the degassing openings (17) is assigned to the respective subarea.

9. Battery according to any one of claims 4 to 8,
**characterized**
- **in that** the cooling plate (9) contains a structured structural plate (9a) facing the respective current busbar (5a, 5b) and a plate-shaped cover plate (9a) facing away from the respective current busbar (5a, 5b), and
- **in that** the at least one channel (10) is formed between the cover plate (9a) and the structural plate (9b).

10. Battery according to any one of claims 4 to 9,
**characterized**
- **in that** the number of collecting areas (21a) of the cooling plate (9) corresponds to the number of cell rows, wherein all battery cells (3) of the respective cell row are assigned to the same collecting area (21a) of the cooling plate (9), and/or
- **in that** the number of contact areas (21b) of the cooling plate (9) corresponds to the number of current busbars (5a, 5b), wherein the respective contact area (21b) is assigned to the respective current busbar (5a, 5b).
